# EUROPEAN PATENT APPLICATION

(11) **EP 4 403 912 A1**
(43) Date of publication of application: **24.07.2024**
(21) Application number: 23152219.4
(22) Date of filing: 18.01.2023
(51) Int. Cl.: G01N 29/04, G01N 29/44, B29C 70/28

(54) **METHOD FOR MANUFACTURING A PREFORM ELEMENT FOR A WIND TURBINE ROTOR BLADE**

(71) Applicant: Siemens Gamesa Renewable Energy A/S, 7330 Brande (DK)
(72) Inventor: Nielsen, Per, 9310 Vodskov (DK); Skjoelstrup, Enok Johannes Haahr, 9220 Aalborg Øst (DK)
(74) Representative: SGRE-Association

(57) **Abstract**

Method for manufacturing a preform element for a wind turbine rotor blade, wherein preform element building material comprising a fiber mat arrangement composed at least of several fiber mats and a binding agent is arranged in a heating means, in which the preform element building material is heated for melting the binding agent in order to bind the fiber mats together for consolidating the fiber mat arrangement, wherein, after the heating, at least one information of the preform element is determined at least locally for evaluating the degree of consolidation of the fiber mat arrangement.

## Description

The invention refers to a method for manufacturing a preform element for a wind turbine rotor blade, wherein preform element building material comprising a fiber mat arrangement composed at least of several fiber mats and a binding agent is arranged in a heating means, in which the preform element building material is heated for melting the binding agent in order to bind the fiber mats together for consolidating the fiber mat arrangement.

A wind turbine rotor blade is composed of a large number of fiber mats made of glass, carbon or aramid fibers, and, if needed, core elements usually made of wood like balsa wood or foamed polymer. The fiber mats and the core elements and possibly further building elements are embedded in a resin matrix, which resin is infused into a mold, in which all the blade building elements are arranged.

As the rotor blades are large items, it is known to use prefabricated preform elements made of a building material comprising a fiber mat arrangement composed at least of several fiber mats and a binding agent. The fiber mats are arranged in a mold together with the non-reactive binder between the fiber mat layers. For example, an epoxy-based binder in powder form is used and is pre-applied to one or both sides of each mat, or is applied to the fiber mats during their arrangement in the mold when preparing the fiber mat stack respectively the mat arrangement, possibly together with some core elements in between the fiber mats etc. When all the preform building material is arranged, heat is applied to the arrangement in the heating means like the mold for activating the binder respectively melting it or softening it, so that it firmly adheres to the fiber mats and the core elements for binding them together after curing the binder. Usually some pressure is applied to the preform building material prior to the heating step, for example by placing the whole arrangement under vacuum pressure. The activation of the binder and curing it afterwards finally binds all items together and consolidates the fiber mat arrangement. After curing the binder, the preform element is removed from the mold respectively the heating means and can be used for building the rotor blade.

It is obvious that the heating process is an essential step in the manufacturing route of the preform element. When too less heat is applied to the building material, the activation of the binder is not sufficient, it does not properly adhere to the fiber mats etc. and therefore cannot bind them sufficiently. The preform element will just fall apart when lifted from the mold, as the individual fiber mats are not consolidated and fixated. On the other hand, if too much heat is applied, the binder migrates into the glass rovings respectively the mat structure, which also makes it difficult to lift the preform element and especially bears problems in regard of the resin infusion in the later manufacturing process of the wind turbine rotor blade, where, as mentioned, fluid resin is infused into the mat arrangement of the preform elements. As the binder has migrated into the fiber mats respectively the rovings, the infusion channels within the structure may be narrowed and an appropriate infusion may not be possible.

Hence, there exists a process window for the heating cycle in order to activate the binder properly for correctly binding the building material for allowing the lifting and a good infusion process. The process window depends in general on the time and the temperature together with the lifting and infusion requirements.

A preform can vary significantly in thickness distribution. In some parts it can be quite thick, for example 60 mm and more, while at the edges and scarfings the thickness may be down to some millimeters or even down to approximately 1 mm. This makes it difficult to heat the preform element properly, as the thick part demands more heat than the thin part, and at the same time it must be avoided that the thin part becomes overheated. Therefore, the heating process and the heat distribution during the process plays an important role in regard of the quality of the preform element, which quality needs to be good as possible, as the preform elements are only intermediate products used in the later manufacturing process of the turbine blade, whose quality, among others, also depends on the preform element quality.

It is therefore an object of the invention to provide an improved method for manufacturing a preform element.

For addressing the object the method for manufacturing a preform element for a wind turbine rotor blade according to the invention is characterized in that, after the heating, at least one information of the preform element is determined at least locally for evaluating the degree of consolidation of the fiber mat arrangement.

The invention proposes to perform a quality control after the preform element is manufactured. After the heating of the material, when the preform element has cooled down for curing the previously heated and melted binder and for consolidating the fiber mat arrangement, at least one information of the preform element is determined, based on which the degree of consolidation of the fiber mat arrangement can be determined. This information allows for determining the binding quality respectively the preform or fiber mat arrangement compaction. It can therefore be determined, if the binder activation was sufficient, and if the binding quality corresponds to the requested binding and consolidation structure. The method allows for evaluating, if too less heat or too much heat or the correct amount of heat has been applied, and if, finally, the quality of the preform element corresponds to the quality parameters requested for using the preform element in the further manufacturing process of the turbine blade.

The information is determined at least locally at the preform element. It is possible to determine the information at several points distributed over the area of the preform element, especially at positions which significantly vary in their thickness, so that at these different element position the respective information can be evaluated for determining the local consolidation degree. This allows for creating a kind of consolidation degree profile or map over the preform element. Certainly, it is also possible to determine the information overall, not only locally, so that the whole preform element is investigated in regard of the consolidation degree respectively the preform compaction and the binding quality.

After performing the quality control it can be decided if the preform element fulfils the quality parameters, so that it can be used in the later manufacturing process, or not. If the preform element has poor quality it may not be used for building the blade, which in turn avoids any quality problems in the blade manufacturing process.

The information which is determined is preferably a density information. In the determination process, an information which is a measure for the density of the preform element is determined. If the binder does not bind the fiber mats, the consolidation respectively compaction is poor, the binder has not been activated appropriately and was not molten. The density respectively the compaction degree is quite low. On the other hand, when the activation was too strong respectively too much heat was applied, the binder migrates, the compaction may be too high, resulting in a very high density. So, the density information is an appropriate information basis for evaluating the consolidation degree.

As a density information, based on which the degree of consolidation is determined, an average density distribution in the volume under investigation is measured respectively determined. The average density information is a direct information to determine whether a preform element has been subjected to a proper heating cycle. The average density distribution is measured in a defined measuring volume or envelope, e.g. 50 - 150 mm in cross section of the item to inspect. If it becomes too small noise will blur the signals, if it becomes too wide the significance of the differences will blur. The average density distribution allows for recognizing the consolidation degree and the element quality, based on which the preform element is finally marked as a good element or as a scrap element.

As mentioned, the information, especially the density information or the average density distribution, is determined in some areas of the preform element, which allows to create a kind of local map of the information respectively density information. In an alternative, also an overall information determination may be performed.

The information, especially the density information or the average density distribution, is preferably determined by a radiation measurement using a radiation source and a radiation detector. According to this embodiment, a scanning of the preform element is performed in order to determine the respective information based on a radiation scan. Radiation is applied by a radiation source onto the manufactured preform element. The radiation detector provides respective measurement signals, which in turn are the respective information, based on which the degree of consolidation is determined. This radiation measurement is a quite simple, nondestructive measurement, which provides very fast and very reliable information from the measured volume or envelope.

The radiation measurement may either be a transmission measurement, in which the radiation transmits through the preform element. The radiation sources provided at one side of the preform element, the radiation detector on the other side. In an alternative, the radiation measurement may also be a backscattering measurement. In this embodiment, both the radiation source and the radiation detector are arranged at the same side of the preform element. The radiation is applied to the preform element, the detector detects backscattered radiation. Both the transmission measurement and the backscattering measurement provide respective radiation information, which may also be visualized in form of pictures, showing the density distribution visually.

The radiation measurement may be an X-ray measurement or an ultrasound measurement. Both types of radiation measurements provide very good results. For generating the X-rays an electron beam can be accelerated onto a target anode producing the X-ray radiation when the electrons hit the anode target. Alternatively, the radiation can be generated using one of the radioactive isotopes Co-60, Ir-192, Se-75, Tl-170, Cs-137 or Yb-169.

The radiation measurement, especially the X-ray or the ultrasonic measurement, provide the respective information or average density distribution information of the currently investigated preform element. In order to evaluate the needed information regarding the degree of consolidation respectively compaction, the measured thickness respectively information needs to be processed. According to the invention, the evaluated information, especially the average density distribution information is compared with reference information, especially reference average density distribution information. This reference information is for example collected by performing a series of reference test with specified heating cycles and several specific or standardized building material arrangements, which are the arrangements required for this specific type of preform element. By performing these series of reference tests it is possible to create a data base showing how different heating cycles on different materials or material arrangements imply different information or average density distribution information respectively measurement results of the radiation measurements. The reference information is qualified respectively referred to a preform elements quality, which fulfills all needs. When comparing an actual information respectively measurement results with a reference test result, any deviations of the actual information or measurement results from the reference information respectively reference results shows a quality difference of the actual preform element compared to a reference preform element. The reference database may also be used to apply certain criteria on the consolidation level that needs to be fulfilled in order to approve an unknown heating cycle. Likewise, reference tests with varying preform layer thickness respectively varying arrangements of the preform building material can also be used as references.

The inventive method allows for a quality control by investigating the preform element itself by investigating or scanning the dry preform element respectively fiber mat arrangement, hence, before the preform element has been casted respectively infused in the resin and has been therefore embedded in the resin matrix of the turbine blade. An investigation respectively the scanning is used to measure the consolidation level of the fiber mat arrangement, which is then linked to the subjected heating cycle. As the preform elements itself are quality controlled, a precise quality information is at hand in order to determine any preform element which does not fulfil the quality requirements. The invention therefore ensures that only preform elements are placed in the blade mold and are then casted into the blade or blade part, which fulfil the strict quality requirements. Therefore, a lot of additional repair work of the finally casted turbine blade or turbine blade part can be avoided, as any possible preform element defects are captured before the blade building process.

The invention further refers to a preform element, manufactured according to the previously described method.

The invention also refers to a method for manufacturing a wind turbine rotor blade or a rotor blade part. This method is characterized in that several preform elements as mentioned above respectively produced according to the previously discussed method are arranged in a manufacturing mold, whereafter a resin is infused for building a resin matrix in which the preform elements are embedded.

This method for manufacturing the blade or blade part focus-ses on the use of only quality controlled preform elements, which fulfil the high quality standard set to the preform element manufacturing method. Therefore, the inventive method for manufacturing the rotor blade or rotor blade part assures that the finally produced blade or blade part will have no defects arising from low quality preform elements respectively preform elements having defects themselves.

Finally, the invention also refers to a wind turbine rotor blade or rotor blade part manufactured as previously discussed.

Other objects and features of the present invention will become apparent from the following detailed description considered in conjunction with the accompanying drawings. The drawings, however, are only principle sketches designed solely for the purpose of illustration and do not limit the invention. The drawings show:
- Fig. 1: shows a manufacturing scheme explaining the central steps of the inventive method for producing a pre-form element and, additionally, the central steps of the further processing of the produced preform element for producing a wind turbine blade or blade part,
- Fig. 2: a principle sketch of a first embodiment for per-forming a preform element quality control, and
- Fig. 3: a principle sketch of a second embodiment of a quality control of a preform element.

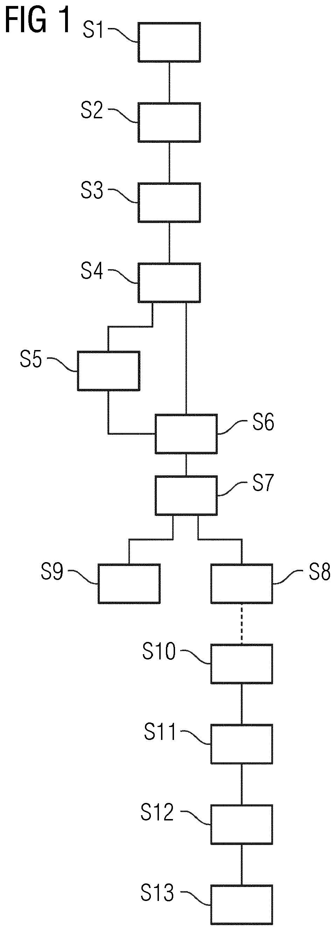

Fig. 1 shows the central steps of the inventive method for manufacturing a preform element for a wind turbine rotor blade or a rotor blade part. In step S1 all the preform building material comprising a number of several fiber mats comprising glass, carbon or aramid fibers are arranged respectively stacked in a preform element manufacturing mold which is a heating means, as it is adapted to apply heat to the preform building material. The heating means defines the geometry of the finally built preform element. In addition to the fiber mats some core elements may be arranged and sandwiched between the fiber mats. Finally, a binding agent is provided, which is preferably an epoxy-based binder. It is arranged between the fiber mat layers. The non-reactive binder may be applied in powder form, either directly on one or both sides to the separate fiber mats before they are stacked, or between the respective fiber mats during their stacking in the heating means. At the end of step S1, all preform element building material is arranged in the heating means in the required arrangement respectively stacking.

In step S2 a certain pressure is applied to the building material arrangement. This can for example be done by providing a cover layer over the building material arrangement, which seals the arrangement to the heating means respectively the mold, so that the vacuum can be applied underneath the upper sealing layer pressing this sealing layer towards the heating means, thereby compacting the building material arrangement.

In step S3 heat is applied to the building material arrangement for softening or melting the binding agent. The binding agent sticks to the fiber mats respectively the core elements, it adheres to them and firmly bonds them together by a substance-to-substance bond. The heating is performed in a specific heating cycle, which is for example defined by respective heating ramps for raising and lowering the temperature, and a certain holding time at a designated temperature.

After performing the heating, the heated arrangement cools down in step S4. This cooling solidifies the binding agent, which now provides a kind of binder matrix firmly connecting the fiber mats and the core elements, so that a compact preform element is provided. All separate building material items, i.e. the fiber mats and, if provided, the core elements, are firmly sticked together, so that ideally no more separate items are present.

Now, two possibilities for the further processing are given. According to step S5 the preform element is lifted from the heating means and transported to an investigation arrangement for collecting at least one information of the preform element for evaluating the degree of consolidation of the fiber mat arrangement. Step S5 nevertheless is not necessary, when this information may be collected while the preform element is still in the heating means respectively the mold. Therefore, step S5 is optional, depending on where the investigation may be performed.

This information collection is performed in step S6. In this step, after the heating respectively the curing of the binder, at least one information of the preform element is determined at least locally for evaluating the degree of consolidation of the fiber mat arrangement respectively of the preform building element material. In this step preferably a radiation measurement is performed for collecting the respective information based on measurement values or signals. This radiation measurement may be a transmission measurement or a backscattering measurement, wherein either X-ray or ultrasound may be used as the scanning radiation. The respective information collection may be performed only locally in some specific designated areas over the preform element, or, in an alternative, the whole preform element may be scanned over its entire area.

The respective information therefore provides either a local information like a local average density information, which allows for a local quality determination, or it provides an overall information like an overall average density information, which allows for an overall quality determination.

The quality information respectively the radiation signals measured with the radiation device allows for determining the average density distribution of the preform element setup, which average density distribution information describes the degree of consolidation of the binding quality. The scanning of the preform elements may be based on a digital transmission measurement or a backscattering measurement. The difference in the consolidation of the preform element under investigation, compared to a reference preform element, is recognized by measuring or determining the average density distribution in the scanned area respectively in a defined measuring envelope. The measuring envelope is defined corresponding to the investigated thickness respectively cross section of the preform element to be inspected in order to have an acceptable signal-to-noise-ratio.

As mentioned, in step S6 the information is collected, preferably in form of a density information like an average density distribution of the scanned area. This information is then processed in step S7. In this step the information is compared with previously collected reference information. This reference information is provided in a database and is collected by performing a series of reference tests with specified heating cycles. The database shows how different heating cycles on different materials imply different measurement results respectively information or average density distribution information. As for example the exact building material arrangement, as arranged in step S1, is known, which corresponds to a certain requirement, the respective reference measurements for the same building material setup may be used for comparing the actual measurement results. The comparison finally shows, if the actual measurement results, like the density distribution, corresponds to the respective reference information or reference density distribution, or if it differs. The degree of the difference can be evaluated and it can finally be determined, if the difference is still acceptable, or not. Based on the comparison, the preform element may be qualified as good in step S8. Such a preform element may then be used for the further processing for building a turbine blade. Or, when the difference is too large, the preform element is qualified as a scrab element in step S9 and is therefore not processed any further.

Fig. 1 also shows the further processing of a preform element having the required quality. Right after the quality control, or after a certain time, the preform element together with a larger number of other qualified preform elements and respective further blade building material is arranged in a blade building mold in step S10. In this step the blade building material is arranged according to the respective requirements, so that a certain arrangement or a stack etc. is built in the blade mold. When all the building material is arranged, a resin infusion is performed in step 511. In this step resin is infused in the blade building material arrangement, which resin fully embeds all the blade building material. After this infusion, the resin is cured in step S12, so that a one-piece turbine blade or turbine blade part is finally built, which is lifted out of the mold in step S13.

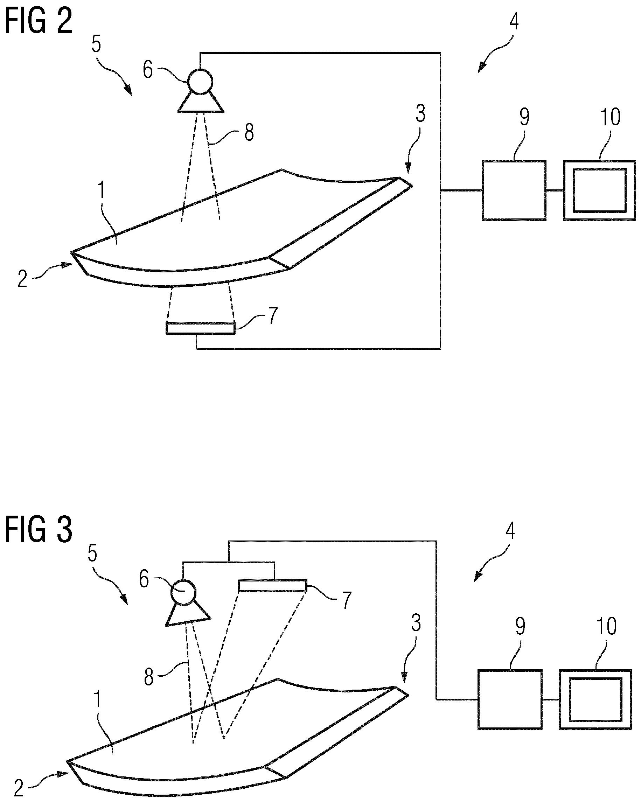

Fig. 2 shows a principle illustration of the quality control of a produced preform element 1. The preform element has a certain geometry and a certain size. As mentioned, it is produced according to the previously method in the steps S1 - S4. In the illustration, the preform element has two longitudinal edge sections 2, 3, in which the thickness significantly varies. Over the rest of the preform element, the thickness may be somehow homogeneous, but even there some variation may be given.

The figure also shows an investigation arrangement 4, comprising a radiation device 5 having a radiation source 6 and a radiation detector 7. The radiation source is for example an X-ray source emitting X-ray radiation 8. The detector 7 is adapted to receive the X-ray radiation 8 and to provide respective detection signals. A control device 9 is provided, which controls both the radiation source 6 and the detector 7, and which processes the detection signals received from the detector 7. A monitor 10 may be used for displaying the respective investigation results or even show respective radiation pictures created based on the detection signals from the radiation detector 7, which pictures may be analysed visually.

The radiation device 5 is a transmission device. The radiation 8 transmits through the preform element. Therefore, the detector 7 detects transmitted radiation and provided transmission signals to the control device 9, which processes these signals for evaluating the information respectively density information and for further evaluating an information about the degree of consolidation of the preform element.

For scanning specific local areas or for performing an overall scan both the radiation source 6 and the radiation detector 7 may be moved in longitudinal and transverse direction of the preform element 1.

Fig. 3 shows another embodiment of an investigation arrangement 4. It shows a preform element 1 comparable to the preform element 1 of fig. 2. The radiation device 5 again comprises a radiation source 6 like an X-ray radiation source and a radiation detector 7 detecting the specific radiation. The radiation source 6 emits radiation 8 like an X-ray radiation towards the preform element 1. From the preform element 1 the radiation is backscattered and is received by the detector 7. As in this embodiment a backscattering measurement is performed, both the radiation source 6 and the radiation detector 7 are arranged at the same side of the preform element 1. This allows to perform the investigation from only one side, even in the mold or in the heating means, where the preform element 1 was previously produced.

Again, the respective detector signals are received and processed by the control device 9, where they are for example compared to reference information in order to determine the respective degree of consolidation and therefore the quality of the preform element 1. The determination result may then again be displayed at the monitor 10.

Although the present invention has been described in detail with reference to the preferred embodiment, the present invention is not limited by the disclosed examples from which the skilled person is able to derive other variations without departing from the scope of the invention.

## Claims

1. Method for manufacturing a preform element for a wind turbine rotor blade, wherein preform element building material comprising a fiber mat arrangement composed at least of several fiber mats and a binding agent is arranged in a heating means, in which the preform element building material is heated for melting the binding agent in order to bind the fiber mats together for consolidating the fiber mat arrangement, **characterized in that**, after the heating, at least one information of the preform element (1) is determined at least locally for evaluating the degree of consolidation of the fiber mat arrangement.

2. Method according to claim 1, **characterized in that** the information is a density information.

3. Method according to claim 2, **characterized in that** the density information is an average density distribution.

4. Method according to one of the preceding claims, **characterized in that** the information, especially the density information or average density distribution is determined in some areas of the preform element (1) or over the whole preform element (1).

5. Method according to one of the preceding claims, **characterized in that** the information, especially the density information is determined by a radiation measurement using a radiation source (6) and a radiation detector (7).

6. Method according to claim 5, **characterized in that** the radiation measurement is a transmission measurement or a backscattering measurement.

7. Method according to claim 5 or 6, **characterized in that** the radiation measurement is an X-ray measurement or an ultrasound measurement.

8. Method according to one of the preceding claims, **characterized in that** the evaluated information, especially density information is compared with reference information, especially reference density information.

9. Preform element (1), manufactured according to the method of one of the preceding claims.

10. Method for manufacturing a wind turbine rotor blade or a rotor blade part, **characterized in that** several preform elements (1) according to claim 9 are arranged in a manufacturing mold, whereafter a resin is infused for building a resin matrix in which the preform elements are embedded.

11. Wind turbine rotor blade or rotor blade part, manufactured according to the method of claim 10.
